(19) Europäisches Patentamt / European Patent Office / Office européen des brevets

(11) **EP 1 542 032 B1**

(12) **FASCICULE DE BREVET EUROPEEN**

(45) Date de publication et mention
de la délivrance du brevet:
**28.05.2008 Bulletin 2008/22**

(51) Int Cl.:
*G01S 5/22* (2006.01)     *G01S 3/808* (2006.01)

(21) Numéro de dépôt: **03356198.6**

(22) Date de dépôt: **11.12.2003**

(54) **Procédé et dispositif de détection et de localisation de sources de bruit correlées ou non**

Verfahren und Anordnung zur Detektion und Ortung von korrelierten oder nicht korrelierten Geräuschquellen

Method and apparatus for detection and localisation of correlated or not correlated noise sources

(84) Etats contractants désignés:
**AT BE BG CH CY CZ DE DK EE ES FI FR GB GR HU IE IT LI LU MC NL PT RO SE SI SK TR**

(43) Date de publication de la demande:
**15.06.2005 Bulletin 2005/24**

(73) Titulaire: **01 dB - Metravib**
**69760 Limonest (FR)**

(72) Inventeurs:
• **Permuy, Alfred**
**92500 Rueil Malmaison (FR)**

• **Millet, Joel**
**38390 Montalieu-Vercieu (FR)**

(74) Mandataire: **Thibault, Jean-Marc et al**
**Cabinet Beau de Loménie**
**51, Avenue Jean Jaurès**
**B.P. 7073**
**69301 Lyon Cédex 07 (FR)**

(56) Documents cités:
**EP-A- 1 273 927**     **DE-A- 2 704 511**
**US-A- 4 628 737**     **US-A- 4 811 250**

## Description

La présente invention se rapporte à la détection et la localisation de sources de bruit au sens général, à l'aide de capteurs appropriés à la nature de la source de buit.

L'objet de l'invention concerne une méthode de détection et de localisation de sources de bruit disposées dans l'espace à une, deux ou trois dimensions, corrélées ou non entre elles et présentant des spectres d'émission à bandes étroites ou larges.

L'objet de l'invention trouve des applications particulièrement avantageuses dans le domaine de la localisation de sources de bruit assorties ou non d'un écho et provenant, par exemple, de véhicules, de navires, d'aéronefs ou d'armes à feu.

Dans de nombreuses applications, il apparaît le besoin de pouvoir localiser, d'une manière relativement précise, une source de bruit afin de prendre les dispositions pour la neutraliser. Il est connu, dans l'état de la technique, de nombreuses solutions permettant de localiser, par voie acoustique, des sources de bruit. Les principales solutions connues font appel aux techniques de corrélation des signaux délivrés par les capteurs de détection.

Ces techniques présentent l'inconvénient d'être particulièrement sensibles aux bruits parasites survenant dans l'environnement des capteurs de mesure. D'autre part, il doit être considéré que ces techniques constituent des méthodes spécifiques adaptées à chaque application considérée.

La technique la plus utilisée exploite des antennes avec un grand nombre de capteurs (quelques centaines) et un système informatique lourd, réalisant une formation de voies permettant une visée dans une direction donnée, de manière à accroître le rapport signal / bruit. Ce procédé ne fait pas d'hypothèse, a priori, sur le nombre de sources et leur éventuelle corrélation, ce qui introduit une perte en résolution.

Il apparaît donc le besoin de pouvoir disposer d'une méthode générale de détection et de localisation de sources de bruit survenant dans l'espace, lorsque le nombre de ces sources de bruit est petit et se trouve connu ou majoré.

L'objet de l'invention vise à satisfaire ce besoin en proposant un procédé de détection et de localisation de sources de bruit à l'aide de capteurs adaptés à la nature de la source de bruit, ce procédé présentant un faible coût de mise en oeuvre.

Pour atteindre cet objectif, le procédé selon l'invention consiste :

- à prélever les signaux électriques temporels délivrés par les capteurs, chaque signal délivré par un capteur étant la somme des signaux émis par les sources de bruit,
- à amplifier et à filtrer les signaux électriques temporels prélevés,
- à numériser les signaux,

  - à calculer la fonctionnelle $f$, telle que :

$$f(\vec{n}_1, \ldots, \vec{n}_j, \ldots, \vec{n}_M) = \frac{d\acute{e}t(<\vec{T}_k(\omega), \vec{T}_l^*(\omega)> \ k, l = 0 \ \grave{a} \ M)}{d\acute{e}t(<\vec{T}_k(\omega), \vec{T}_l^*(\omega)> \ k, l = 1 \ \grave{a} \ M)}$$

avec

$$\left(\vec{T}_k(\omega)\right)_i = e^{J\omega \frac{<\vec{n}_k, \vec{c}_i>}{c}}$$

$< ., .>$ étant le produit scalaire,
$..\vec{c}_i$ étant le vecteur construit à partir du barycentre des capteurs et de la position du capteur **i**,
$..\vec{n}_j$ étant le vecteur unitaire de la direction définie par le barycentre des capteurs et la source $j$,
.. avec $\vec{T}o = \vec{s}$
.. avec **c** = célérité du son

- et à assurer une minimisation, par rapport aux vecteurs $\vec{n}_j$ de la fonctionnelle, de manière à déterminer les directions des sources de bruit.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** illustre, de manière schématique, le principe du procédé de détection selon l'invention.

La **fig. 2** est un schéma illustrant un détail caractéristique du procédé selon l'invention.

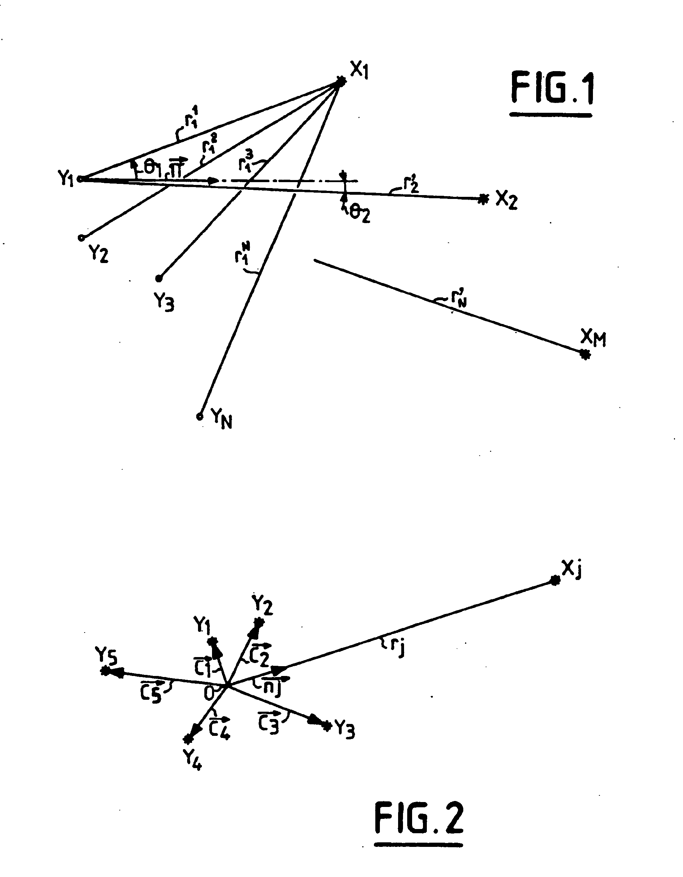

Tel que cela apparaît sur la **fig. 1,** le procédé selon l'invention consiste à localiser des sources de bruit $X_1$, $X_2$, ..., $X_j$, ... $X_M$ avec $j$ variant de 1 à M, réparties dans l'espace et émettant chacune, respectivement, un signal $S_j$, avec $j$ variant de 1 à M. Le procédé selon l'invention consiste à localiser les sources de bruit $X_j$ à l'aide de capteurs de vibrations ou d'ondes acoustiques $Y_1$, $Y_2$, ... $Y_i$, ... $Y_N$, avec $i$ variant de 1 à N, délivrant chacun, respectivement, un signal électrique temporel $s_1$, $s_2$, ..., $s_i$, ... $s_N$.

Le procédé consiste à prélever les signaux électriques temporels $s_i(t)$ délivrés par chaque capteur et représentatifs de la somme des signaux $S_j$ émis par les sources de bruit $X_j$. Les signaux $s_i(t)$ reçus sur les N capteurs s'écrivent à partir de la somme des contributions des différentes sources de la manière suivante :

$$s_i(t) = \sum_{j=1}^{M} A_{ij} \ S_j \ (t - \frac{r_{ij}}{c}),$$

avec $i$ = 1 à N, et $r_{ij}$, la distance de la source de bruit $X_j$ au capteur $Y_i$, et $c$, la célérité du son dans son milieu ambiant.

Le terme $A_{ij}$ traduit l'atténuation due à la propagation ainsi que le facteur de sensibilité des capteurs et s'exprime par :

$$A_{ij} = B_i \ C(r_{ij}) \ ,$$

avec $i$ = 1 à N et $j$ = 1 à M, où $B_i$ est le coefficient de sensibilité du capteur $Y_i$ et où $C\ (r_{ij})$ est le coefficient d'atténuation due à la propagation sur une distance $r_{ij}$.

Les capteurs $Y_i$ sont associés à une unité électronique non représentée, assurant une amplification et un filtrage passe-bande des signaux recueillis. De préférence, les capteurs sont appariés en module et en phase, de sorte que les sensibilités sont identiques. Ainsi, $B_i$ = $G$ pour $i$ = 1 à N.

Avantageusement, pour faciliter la mise en oeuvre de l'antenne de capteurs ainsi définie, les capteurs $Y_i$ sont placés relativement proches les uns des autres. Par conséquent, pour des sources éloignées, la distance $r_{ij}$ est de l'ordre de la distance $r_j$, c'est-à-dire de la distance entre le barycentre des capteurs et la source $X_j$. Ainsi, l'atténuation n'est plus fonction que de la distance $r_j$, avec $C(r_{ij}) = C(r_j)$, avec $i$ = 1 à N et $j$ = 1 à M.

Il peut en être déduit que :

$$A_{ij} \ = \ G.C(r_j) \ = \ a(r_j) \ ,$$

avec $i$ = 1 à N et $j$ = 1 à M et :

$$s_i(t) \ = \ \sum_{j=1}^{M} \ a(r_j) \ S_j(t \ - \ \frac{r_{ij}}{c}) \ ,$$

avec $i$ = 1 à N.

L'amplitude des sources $X_j$ étant inconnues, il peut être écrit, en intégrant le terme $a(r_j)$ dans $S_j$:

$$s_i(t) = \sum_{j=1}^{M} S_j(t - \frac{r_{ij}}{c}) ,$$

avec $i = 1$ à N.

L'expression des signaux $s_i(t)$, en utilisant les transformées de Fourier, devient :

$$(1) \quad \hat{s}_i(\omega) = \sum_{j=1}^{M} \hat{S}_j(\omega).e^{-J\omega\frac{r_{ij}}{c}} ,$$

avec $i = 1$ à N,

où $\hat{s}$ et $\hat{S}$ sont les transformées de Fourier de **s** et **S** respectivement et $\omega$ étant la pulsation.

Cette première relation (1) lie les signaux reçus aux distances $r_{ij}$, c'est-à-dire aux positions des sources $X_j$.

Tel que cela ressort de la **fig. 2,** il peut être exprimé d'autres relations liées à des considérations géométriques, permettant de relier les distances $r_{ij}$ au vecteur unitaire $\vec{n}_j$, qui détermine la direction définie par le barycentre des capteurs et la source générant le signal $S_j$. La position des capteurs est définie par le vecteur $\vec{C}_i$ construit à partir de la position des capteurs $Y_i$ et de leur barycentre. Un développement limité à l'ordre 1 de $r_{ij}$ fourni alors :

$$(2) \quad r_{ij} \simeq r_j - <\vec{n}_j, \vec{c}_i> ,$$

avec $i = 1$ à N et $j = 1$ à M, où $< ., . >$ est le produit scalaire.

Ainsi, en remplaçant $r_{ij}$ par l'expression approchée établie en (2) et en intégrant le terme de phase :

$$e^{-J\omega\frac{r_j}{c}}$$

qui ne dépend que de la source $X_j$ dans la grandeur $\hat{S}_j(\omega)$, la relation (1) s'écrit alors :

$$(3) \quad \hat{s}_i(\omega) = \sum_{j=1}^{M} \hat{S}_j(\omega).e^{J\omega\frac{<\vec{n}_j, \vec{c}_i>}{c}} ,$$

avec $i = 1$ à N.

Cette relation peut s'exprimer aussi sous une forme matricielle et vectorielle :

$$(4) \quad \vec{s}(\omega) = \sum_{j=1}^{M} \hat{S}_j(\omega).\vec{T}_j(\omega)$$

avec pour la ième coordonnée du vecteur $\vec{T}_j$ :

$$(\vec{T_j})_i = e^{J\omega \frac{<\vec{n}_j, \vec{\varepsilon}_i>}{c}},$$

avec $i$ = 1 à N.
Ou encore :

$$(5) \quad \vec{s}(\omega) = T.\vec{S}(\omega)$$

avec **T** = matrice de terme général :

$$T_{ij} = e^{J\omega \frac{<\vec{n}_j, \vec{\varepsilon}_i>}{c}}.$$

En présence d'un bruit additif, la relation (4) devient :

$$(6) \quad \vec{s}(\omega) = \sum_{j=1}^{M} \hat{S}_j(\omega).\vec{T}_j(\omega) + \vec{B}(\omega)$$

où $\vec{B}$ est le vecteur bruit, dépendant de $\omega$.

Le procédé selon l'invention consiste à déterminer les directions des sources $\mathbf{X}_j$, définies par les vecteurs $\vec{n}_j$, pour $j$ = 1 à M.

Dans le cas où les sources $\mathbf{X}_j$ sont quelconques, c'est-à-dire corrélées ou non, la probabilité de présence d'un bruit gaussien $\vec{B}$ sur les capteurs $\mathbf{Y}_i$ est donnée par :

$$b.e^{-a\int |\vec{B}|^2 d\omega}$$

où $a$ et $b$ dépendent de la variance.

Ainsi, la position la plus probable des sources est, d'après la relation (6), celle qui minimise la grandeur suivante :

$$\left\| \vec{s}(\omega) - \sum_{j=1}^{M} \hat{S}_j(\omega).\vec{T}_j(\omega) \right\|^2.$$

En d'autres termes, la projection de $\vec{s}$ sur la direction orthogonale à l'hyperplan engendré par les vecteurs $\vec{T}_j$, pour $j$ = 1 à M, doit être de norme minimale.

Or, il s'agit-là du carré de la hauteur du parallélépipède construit sur les vecteurs $\vec{s}$ et $\vec{T}_j$, cette hauteur **h** se calculant comme le rapport du volume **V** à la surface de la base **S,** soit :

$$h = \frac{V}{S}.$$

Les grandeurs **V** et **S** s'expriment en fonction des déterminants des matrices de Gramm, dont l'élément (**k, l**) est constitué par le produit scalaire :

$$<\vec{T}_k, \vec{T}_l^*>,$$

avec $\vec{T}_i^*$ vecteur conjugué de $\vec{T}_i$.
Ainsi

$$S^2 = d\acute{e}t(<\vec{T}_k, \vec{T}_l^*> \quad k, l = 1 \text{ à } M)$$

$$V^2 = d\acute{e}t(<\vec{T}_k, \vec{T}_l^*> \quad k, l = 0 \text{ à } M)$$

où l'on a posé $\vec{T}_0 = \vec{s}$.
Ainsi :

$$\|\vec{B}\|^2 = \frac{V^2}{S^2}$$

ou encore :

$$f(\vec{n}_1, ..., \vec{n}_j, ..., \vec{n}_M) = \|\vec{B}\|^2.$$

Il s'agit ici d'une fonction des vecteurs $\vec{n}_j$, qui en dimension 3, ne dépendent que de deux angles $\theta_j$ et $\varphi_j$, site et azimut, et de la pulsation $\omega$. Toute connaissance a priori sur les spectres des sources $S_j$ peut, par ailleurs, être utilisée. Par exemple :

-    pour des sources de bruit à bande étroite, il est prévu de minimiser la fonctionnelle $f_1$ suivante :

$$(7) \quad f_1 = \sum_k \|\vec{B}(\omega_k)\|^2,$$

$\omega_k$ étant les pulsations d'intérêt,
-    pour des sources de bruit à bande large, il est prévu de minimiser la fonctionnelle $f_2$ suivante portant sur les segments d'intérêts :

$$(8) \quad f_2 = \int \|\vec{B}(\omega)\|^2 d\omega.$$

Dans la pratique, au lieu de calculer

$$\|\vec{B}\|^2$$

on peut utiliser une méthode sous-optimale qui consiste à remplacer le dénominateur $S^2$ par 1. Il peut alors être montré, à condition de rechercher des directions solutions $\vec{n_j}$ suffisamment distinctes, qu'il peut être obtenu des solutions proches de la méthode exacte. Le dénominateur, qui s'annule lorsque deux sources au moins sont confondues, permet d'éliminer en fait les solutions parasites où plusieurs directions sont identiques.

Dans le cas où la méthode sous-optimale est un traitement large bande, il s'agit de minimiser la fonctionnelle $f_3$ suivante :

$$(9) \quad f_3 = \int d\acute{e}t(<\vec{T}_k, \vec{T}_l^*> \quad k, l = 0 \text{ à } M) d\omega.$$

Cette grandeur, qui s'exprime comme une combinaison linéaire des fonctions d'intercorrélations $\gamma_{ij}$ des signaux $s_i$ et $s_j$ prises en des points eux-mêmes combinaison linéaire des retards :

$$\frac{<\vec{n}_j, \vec{c}_i>}{c}.$$

Ces fonctions d'intercorrélation ne sont calculées que pour des retards de l'ordre de grandeur des dimensions de l'antenne divisées par la vitesse du son. Le calcul peut donc être avantageusement réalisé dans le domaine temporel par rapport à un calcul usuellement fait dans le domaine fréquentiel à partir des transformées de Fourier.

Le procédé décrit ci-dessus consiste donc :

- à partir d'une antenne de quelques capteurs (2 à 10 et, de préférence, 2 à 5), à prélever l'information acoustique ou vibratoire,
- à amplifier et à filtrer les signaux reçus de manière à limiter le spectre et à apparier les capteurs en phase en en gain,
- à numériser les signaux,
- à minimiser la projection du vecteur $\vec{s}$ sur la direction orthogonale aux vecteurs $\vec{T}_j$, suivant les deux techniques de calcul a) et b) suivantes :

  a) + à réaliser les transformées de Fourier des signaux $s_i$,
  + à calculer l'une des fonctionnelles $f_1, f_2,$ en utilisant les expressions des déterminants des matrices de Gramm définies ci-dessus,
  + et à minimiser l'une des fonctionnelles $f_1, f_2$ qui dépendent du nombre de sources à localiser,
  b) + à utiliser un algorithme simplifié qui consiste à minimiser la fonctionnelle $f_3,$
  + à calculer les fonctions d'intercorrélation $\gamma_{ij},$
  + et à minimiser une combinaison linéaire de ces fonctions d'intercorrélation, dépendant du nombre de sources.

Lorsque l'opération de minimisation a été effectuée, les directions $\vec{n_j}$ des sources de bruit sont déterminées. Avantageusement, il est également possible de retrouver les caractéristiques des sources de bruit $X_j$.

En effet, si N = M, c'est-à-dire autant de capteurs que de sources, le système (5) peut, en général, s'inverser.

Si N ≥ M, le problème se ramène à un système carré par une pré-multiplication par :

$$^t T^*,$$

matrice transposée conjugée de **T**. Le système (5) devient alors :

$$^{t}T^{*}.\,\bar{s}(\omega)\;=\;^{t}T^{*}.T.\bar{S}(\omega).$$

Soit :

$$(10)\quad \bar{S}(\omega)\;=\;(^{t}T^{*}.T)^{-1}\,^{t}T^{*}.\,\bar{s}(\omega).$$

A partir de la relation (10), il peut être calculé les signaux $S_j$, afin de retrouver les caractéristiques des sources $X_j$.

La description qui suit donne un exemple de réalisation pour la détection d'une sources de bruit (M = 1) par l'intermédiaire de N capteurs.

On obtient alors :

$$\|\vec{B}(\omega)\|^{2} = \frac{\begin{vmatrix} \|\vec{s}(\omega)\|^{2} & \displaystyle\sum_{i=1}^{N} \hat{s}_{i}{}^{*}(\omega)\,e^{+J\omega\frac{\langle\vec{n},\,\vec{c}_{i}\rangle}{c}} \\ \displaystyle\sum_{i-1}^{N} \hat{s}_{i}{}^{*}(\omega)\,e^{-J\omega\frac{\langle\vec{n},\,\vec{c}_{i}\rangle}{c}} & N \end{vmatrix}}{N}$$

Soit :

$$\|\vec{B}(\omega)\|^{2} = \frac{1}{N}\left[(N\text{-}1)\,.\,\|\vec{s}(\omega)\|^{2} - \sum_{\substack{k,l \\ k\neq l}} \hat{s}_{k}(\omega)\,\hat{s}_{l}^{*}(\omega)\,e^{J\omega\frac{\langle\vec{n},\,\vec{c}_{l}-\vec{c}_{k}\rangle}{c}}\right]$$

Dans le cas de sources large bande, il s'agit donc de minimiser :

$$\int\|\vec{B}(\omega)\|^{2}\,d\omega = \frac{1}{N}\left[(N\text{-}1)\int\|\vec{s}(\omega)\|^{2}\,d\omega - \sum_{\substack{k,l \\ k\neq l}} \mathrm{Re}\left\{\int \hat{s}_{k}(\omega)\,\hat{s}_{l}^{*}(\omega)\,e^{J\omega\frac{\langle\vec{n},\,\vec{c}_{l}-\vec{c}_{k}\rangle}{c}}\,d\omega\right\}\right]$$

Soit, en notant $\gamma_{kl}$ les intercorrélations entre les signaux mesurés :

$$\int\|\vec{B}(\omega)\|^{2}\,d\omega = \frac{1}{N}\left[(N\text{-}1)\int\|\vec{s}(t)\|^{2}\,dt - \sum_{\substack{k,l \\ k\neq l}} \gamma_{kl}\left(\frac{\langle\vec{n},\,\vec{c}_{l}-\vec{c}_{k}\rangle}{c}\right)\right]$$

Le problème se ramène donc à la maximisation de

$$\sum_{\substack{k,l \\ k \neq l}} \gamma_{kl} \left( \frac{\langle \vec{n}, \vec{c_l} - \vec{c_k} \rangle}{c} \right)$$

par variation de $\vec{n}$ qui ne dépend que de **Np** paramètres. **Np** étant égal à la dimension de l'espace moins 1 unité.

**Revendications**

**1.** - Procédé de détection et de localisation de sources de bruit ($X_j$) émettant chacune respectivement des signaux ($S_j$) avec $j$=1 à M, la détection étant assurée à l'aide de capteurs de vibrations ou d'ondes acoustiques ($Y_i$) délivrant chacun, respectivement, un signal électrique temporel ($s_i$) avec $i$ variant de 1 à N, **caractérisé en ce qu'**il consiste :

- à prélever les signaux électriques temporels délivrés par les capteurs ($Y_i$), chaque signal $s_i(t)$ délivré par un capteur étant la somme des signaux ($S_j$) émis par les sources de bruit ($X_j$),
- à amplifier et à filtrer les signaux électriques temporels prélevés,
- à numériser les signaux électriques,
- à calculer la fonctionnelle (**f**), telle que :

$$f(\vec{n}_1, ..., \vec{n}_j, ..., \vec{n}_M) = \frac{d\acute{e}t(\langle \vec{T}_k(\omega), \vec{T}_l^*(\omega) \rangle \quad k, l = 0 \text{ à M})}{d\acute{e}t(\langle \vec{T}_k(\omega), \vec{T}_l^*(\omega) \rangle \quad k, l = 1 \text{ à M})}$$

avec

$$\left( \vec{T}_k(\omega) \right)_i = e^{J\omega \frac{\langle \vec{n}_k, \vec{c}_i \rangle}{c}}$$

$\langle ., . \rangle$ étant le produit scalaire,
$\vec{c}_i$ étant le vecteur construit à partir du barycentre des capteurs et de la position du capteur **i**,
$\vec{n}_j$ étant le vecteur unitaire de la direction définie par le barycentre des capteurs et la source j,
.. avec $\vec{T_o} = \vec{s}$
.. avec **c** = célérité du son

- et à assurer une minimisation, par rapport aux vecteurs ($\vec{n}_j$), pour $j$ = 1 à M, de la fonctionnelle (**f**), de manière à déterminer les directions ($\vec{n}_j$) des sources de bruit ($X_j$).

**2.** - Procédé selon la revendication 1, **caractérisé en ce qu'**il consiste, pour minimiser la fonctionnelle (**f**), dans le cas de sources de bruit ($X_j$) à bande étroite :

- à calculer les transformées de Fourier des signaux $s_i(t)$ délivrés par les capteurs,
- à calculer, en utilisant les expressions des déterminants des matrices de terme général :

$$\langle \vec{T}_k(\omega), \vec{T}_l^*(\omega) \rangle$$

la fonctionnelle :

$$f_1 = \sum_k \|\vec{B}(\omega_k)\|^2,$$

- et après avoir sélectionné un nombre déterminé de sources de bruit, à minimiser la fonctionnelle ($f_1$) pour déterminer les directions ($\vec{n_j}$) des sources de bruit ($X_j$) sélectionnées.

3.  - Procédé de détection selon la revendication 1, **caractérisé en ce qu**'il consiste, pour minimiser la fonctionnelle ($f$), dans le cas de sources de bruit ($X_j$) à large bande :

   - à calculer les transformées de Fourier des signaux $s_i(t)$ délivrés par les capteurs,
   - à calculer, en utilisant les expressions des déterminants des matrices de terme général :

$$<\vec{T}_k(\omega),\vec{T}_l^*(\omega)>$$

la fonctionnelle :

$$f_2 = \int \|\vec{B}(\omega)\|^2 d\omega,$$

   - et après avoir sélectionné un nombre déterminé de sources de bruit, à minimiser la fonctionnelle ($f_2$) pour déterminer les directions ($\vec{n_j}$) des sources de bruit ($X_j$) sélectionnées.

4.  - Procédé de détection selon la revendication 1, **caractérisé en ce qu**'il consiste, pour minimiser la fonctionnelle ($f$) :

   - à simplifier l'expression de la fonctionnelle ($f$) pour minimiser la fonctionnelle ($f_3$) suivante :

$$f_3 = \int d\acute{e}t(<\vec{T}_k, \vec{T}_l^*> \quad k, l = 0 \text{ à } M)d\omega,$$

   - à calculer les fonctions d'intercorrélation ($\gamma_{ij}$) des signaux ($s_i$) et ($s_j$),
   - et après avoir sélectionné un nombre déterminé de sources de bruit, à minimiser la fonctionnelle ($f_3$).

5.  - Procédé de détection selon la revendication 1, **caractérisé en ce qu**'il consiste, après l'opération de minimisation, à calculer le vecteur source :

$$\vec{S}(\omega) = ({}^t T^*.T)^{-1}.{}^t T^*. \bar{s}(\omega),$$

afin de retrouver les caractéristiques des sources de bruit ($X_j$).

**Claims**

1.  - A method of detecting and locating noise sources ($X_j$) each emitting a respective signal ($S_j$) with $j$ = 1 to M, detection being provided by means of acoustic wave or vibration sensors ($Y_i$) each delivering a respective time-varying

electrical signal ($s_i$) with $i$ lying in the range 1 to N, the method being **characterised in that** it consists:

- in taking the time-varying electrical signals delivered by the sensors ($Y_i$), each signal $s_i(t)$ delivered by a sensor being the sum of the signals ($S_j$) emitted by the noise sources ($X_j$);
- in amplifying and filtering the time-varying electrical signals as taken;
- in digitizing the electrical signals;
- in calculating the functional (f), such that:

$$f(\vec{n}_1, \ldots, \vec{n}j, \ldots, \vec{n}_M) = \frac{\det(\langle \vec{T}_k(\omega), \vec{T}_l^*(\omega)\rangle, \ \mathrm{k,l} = 0 \ \mathrm{bis \ M})}{\det(\langle \vec{T}_k(\omega), \vec{T}_l^*(\omega)\rangle, \ \mathrm{k,l} = 1 \ \mathrm{bis \ M})}$$

with

$$\left(\vec{T}_k(\omega)\right)_i = e^{J\omega \frac{<\vec{n}_k, \vec{c}_i>}{c}}$$

$<.,.>$ being the scalar product;
.. $\vec{c}_i$ being the vector constructed between the centre of gravity of the sensors and the position of sensor $i$;
.. $\vec{n}_j$ being the unit vector in the direction defined by the centre of gravity of the sensors and source $j$;
.. with $\vec{T}o = \vec{s}$;
.. with $c$ = the speed of sound; and

- in minimizing the functional (f) relative to the vectors ($\vec{n}_j$) for $j$ = 1 to M in such a manner as to determine the directions ($\vec{n}_j$) of the noise sources ($X_j$).

2.   - A method according to claim 1, **characterised in that**, in order to minimize the functional (f) when the noise sources ($X_j$) are narrow band sources, the method consists:

- in calculating the Fourier transforms of the signals $s_i(t)$ delivered by the sensors;
- in using the expressions for the determinants of the matrices of general term:

$$\langle \vec{T}_k(\omega), \vec{T}_l^*(\omega)\rangle$$

to calculate the functional:

$$f_1 = \sum_k \|\vec{B}(\omega_k)\|^2$$

- and after selecting a determined number of noise sources, in minimizing the functional ($f_1$) to determine the directions ($\vec{n}_j$) of the selected noise sources ($X_j$).

3.   - A detection method according to claim 1, **characterised in that**, in order to minimize the functional (f) when the noise sources ($X_j$) are broad band, the method consists:

- in calculating the Fourier transforms of the signals $s_j(t)$ delivered by the sensors;
- in using the expressions of the determinants of the matrices of general term:

$$\langle \vec{T}_k(\omega), \vec{T}_l^*(\omega)\rangle$$

to calculate the functional:

$$f_2 = \int \|\vec{B}(\omega)\|^2 d\omega$$

- and after selecting a determined number of noise sources, in minimizing the functional ($f_2$) to determine the directions ($\vec{n}_j$) of the selected noise sources ($X_j$).

4. - A detection method according to claim 1, **characterised in that**, in order to minimize the functional (f), the method consists:

- in simplifying the expression for the functional (f) to minimize the following functional ($f_3$):

$$f_3 = \int \det(\langle \vec{T}_k, \vec{T}_l^*\rangle \ k, \ l = 0 \ \text{bis} \ M)d\omega$$

- in calculating the cross-correlation functions ($\gamma_{ij}$) of the signals ($s_i$) and ($s_j$); and
- after selecting a determined number of noise sources, in minimizing the functional ($f_3$).

5. - A detection method according to claim 1, **characterised in that**, after the minimization operation, the method consists in calculating the source vector:

$$\vec{S}(\omega) = ({}^tT^*.T)^{-1}.{}^tT^*. \ \vec{s}(\omega)$$

in order to discover the characteristics of the noise sources ($X_j$).

**Patentansprüche**

1. Verfahren zur Detektion und Ortung von Geräuschquellen (**X**$_j$), die jeweils Signale (**S**$_j$) aussenden, mit **j** = 1 bis **M**, wobei die Detektion mit Hilfe von Schallschwingungs- oder Schallwellensensoren (**Y**$_i$) sichergestellt wird, die jeweils ein zeitabhängiges elektrisches Signal (s$_i$) liefern, wobei **i** von 1 bis **N** läuft, **dadurch gekennzeichnet, daß** es umfaßt:

- Abnehmen der von den Sensoren (**Y**$_i$) gelieferten zeitabhängigen elektrischen Signale, wobei jedes von einem Sensor gelieferte Signal **s$_i$(t)** die Summe der Signale (**S**$_j$) ist, die von den Geräuschquellen (**X**$_j$) ausgesendet werden,
- Verstärken und Filtern der abgenommenen zeitabhängigen elektrischen Signale,
- Digitalisieren der elektrischen Signale,
- Berechnen des Funktionals (f), so daß gilt:

$$f(\vec{n}_1, ..., \vec{n}j, ..., \vec{n}_M) = \frac{\det(\langle \vec{T}_k(\omega), \vec{T}_l^*(\omega)\rangle, \ k, l = 0 \ \text{bis M})}{\det(\langle \vec{T}_k(\omega), \vec{T}_l^*(\omega)\rangle, \ k, l = 1 \ \text{bis M})}$$

mit

$$\left(\vec{T}_k(\omega)\right)_i = e^{J\omega\frac{<\vec{n}_k,\vec{c}_i>}{c}}$$

wobei (.,.) das Skalarprodukt ist,

$\vec{c}_i$ der Vektor ist, der ausgehend von dem Baryzentrum der Sensoren und der Position des Sensors *i* konstruiert wurde,
$\vec{n}_j$ der Einheitsvektor der Richtung ist, die durch das Baryzentrum der Sensoren und die Quelle *j* definiert ist,
mit $\vec{T}o=\vec{s}$,
mit c = Schallgeschwindigkeit,

- und Gewährleisten einer Minimierung des Funktionals (*f*) bezüglich der Vektoren ($\vec{n}_j$) für *j* = 1 bis M, derart, daß die Richtungen ($\vec{n}_j$) der Geräuschquellen (**X**$_j$) bestimmt werden.

**2.** Verfahren nach Anspruch 1, **dadurch gekennzeichnet, daß** es, um das Funktional (*f*) im Falle von Geräuschquellen (**X**$_j$) mit schmalem Band zu minimieren, darin besteht:

- die Fouriertransformierten der von den Sensoren gelieferten Signale **s**$_i$**(t)** zu berechnen,
- unter Verwendung der Ausdrücke der Determinanten der Matrizen der allgemeinen Form

$$\langle\vec{T}_k(\omega),\vec{T}_l^*(\omega)\rangle$$

das Funktional

$$f_1 = \sum_k |\vec{B}(\omega_k)|^2$$

zu berechnen,
- und nach Auswahl einer bestimmten Anzahl von Geräuschquellen das Funktional (**f**$_1$) zu minimieren, um die Richtungen ($\vec{n}_j$) der ausgewählten Geräuschquellen (**X**$_j$) zu bestimmen.

**3.** Verfahren zur Detektion nach Anspruch 1, **dadurch gekennzeichnet, daß** es, um das Funktional **(f)** im Falle von Geräuschquellen (**X**$_j$) mit breitem Band zu minimieren, darin besteht:

- die Fouriertransformierten der von den Sensoren gelieferten Signale **s**$_i$**(t)** zu berechnen,
- unter Verwendung der Ausdrücke der Determinanten der Matrizen der allgemeinen Form

$$\langle\vec{T}_k(\omega),\vec{T}_l^*(\omega)\rangle$$

das Funktional

$$f_2 = \int|\vec{B}(\omega)|^2 d\omega$$

zu berechnen,
- und nach Auswahl einer bestimmten Anzahl von Geräuschquellen das Funktional (**f**$_2$) zu minimieren, um die Richtungen ($\vec{n}_j$) der ausgewählten Geräuschquellen (**X**$_j$) zu bestimmen.

4. Verfahren zur Detektion nach Anspruch 1, **dadurch gekennzeichnet, daß** es, um das Funktional (**f**) zu minimieren, darin besteht:

- den Ausdruck für das Funktional (**f**) zu vereinfachen, um das folgende Funktional (**f₃**) zu minimieren:

$$f_3 = \int \det(\langle \vec{T}_k, \vec{T}_l^* \rangle \ \ k, \ l = 0 \ \text{bis} \ M)d\omega$$

- die Kreuzkorrelationsfunktionen ($\gamma_{ij}$) der Signale (**s$_i$**) und (**s$_j$**) zu berechnen,
- und nach Auswahl einer bestimmten Anzahl von Geräuschquellen das Funktional (**f$_3$**) zu minimieren.

5. Verfahren zur Detektion nach Anspruch 1, **dadurch gekennzeichnet, daß** es darin besteht, nach der Operation der Minimierung den Quellenvektor

$$\bar{\bar{S}}(\omega) \ = \ ({}^t T^* . T)^{-1} {}^t T^* . \ \bar{s}(\omega)$$

zu minimieren, um die Kenndaten der Geräuschquellen (**X$_j$**) zu ermitteln.

FIG.1

FIG.2